# NEUE EUROPÄISCHE PATENTSCHRIFT

(11) **EP 3 112 098 B2**
(45) Veröffentlichungstag und Bekanntmachung des Hinweises auf die Entscheidung über den Einspruch: **19.08.2026**
(45) Hinweis auf die Patenterteilung: 15.12.2021
(21) Anmeldenummer: 16178914.4
(22) Anmeldetag: 17.01.2014
(51) Int. Cl.: B25J 19/00, H02G 11/00

(54) **VORRICHTUNG ZUR FÜHRUNG VON ZUMINDEST EINER LEITUNG EINES GELENKARMROBOTERS SOWIE GELENKARMROBOTER**
DEVICE FOR GUIDING AT LEAST ONE LINE OF AN ARTICULATED ARM ROBOT AND ARTICULATED ARM ROBOT
DISPOSITIF DE GUIDAGE D'AU MOINS UN CABLE D'UN ROBOT ARTICULE ET ROBOT ARTICULE

(30) Priorität: 18.01.2013 FR 1350467; 18.01.2013 US 201361754214 P
(43) Veröffentlichungstag der Anmeldung: 04.01.2017
(62) Dokumentnummer(n) der früheren Anmeldung(en) nach Art. 76 EPÜ: 14704756.7 / 2 956 277
(73) Patentinhaber: BizLink Robotic Solutions Germany GmbH, 98574 Schmalkalden (DE)
(72) Erfinder: BURLOT, Claude, 78830 Bullion (FR)
(74) Vertreter: FDST Patentanwälte

(56) Entgegenhaltungen:
- EP-A1- 1 574 302
- EP-B1- 1 848 571
- WO-A1-2011/025081
- DE-A1- 102008 062 948
- DE-A1- 102009 037 515
- DE-A1- 102009 037 517
- DE-A1- 102011 018 440
- DE-A1- 19 645 413
- DE-A1- 19 847 855
- DE-U1- 20 115 055
- DE-U1- 202012 004 601
- GB-A- 2 283 957
- JP-A- 2002 067 828
- JP-A- 2012 161 903
- KR-Y1- 200 441 888
- US-A1- 2009 166 478

## Beschreibung

Die Erfindung betrifft eine Vorrichtung zur Führung von zumindest einer Leitung eines Gelenkarmroboters, insbesondere zur Führung eines Schlauchpaketes eines Industrieroboters. Die Erfindung betrifft weiterhin einen Gelenkarmroboter mit einer solchen Vorrichtung.

Eine solche Vorrichtung ist beispielsweise aus der EP 1 848 571 B1 zu entnehmen.

Bei den heute üblicherweise eingesetzten mehrachsigen Industrierobotern werden dem vordersten, auch als Roboterhand bezeichneten Roboterarm mehrere Einzelleitungen zur Versorgung eines an der Roboterhand angeordneten Werkzeugs, beispielsweise ein Schweißwerkzeug, zugeführt. Die Einzelleitungen sind beispielsweise elektrische Versorgungskabel, elektrische Steuerkabel, Datenkabel sowie Medienführungen für Gase oder Flüssigkeiten. Diese Einzelleitungen werden in einem so genannten Schlauchpaket zusammengefasst und sind in einem schlauchförmigen Schutzmantel gehalten. Ein derartiges Schlauchpaket ist zum einen wegen der Relativbewegungen der Roboterarme zueinander und insbesondere auch wegen der oftmals widrigen Umgebungsbedingungen (hohe Temperaturen, aggressive Medien, wie Schweißspritzer, etc.) hohen Belastungen ausgesetzt.

Um eine zuverlässige Führung des Schlauchpakets zu ermöglichen, wird üblicherweise eine Leitungsführungseinrichtung eingesetzt, welche derart beschaffen ist, dass eine Ausgleichsbewegung des Schlauchpakets bei einer Relativbewegung zwischen zwei Roboterarmen ermöglicht ist. Eine Leitungsführungseinrichtung bei einem Industrieroboter ist beispielsweise aus der DE 201 13 742 U1 zu entnehmen.

In der EP 1 848 571 B1 ist eine Vorrichtung beschrieben, welche eine Führungseinheit sowie ein Schieberelement aufweist, welches relativ zu der Führungseinheit an dieser mittels Stangen zwischen einer ersten und einer zweiten Position längsverschieblich gelagert ist. Weiterhin ist eine als Schraubenfeder ausgebildete elastische Rückstelleinheit vorgesehen, welche eine elastische Rückstellkraft auf das Schiebeelement ausübt.

Aus der JP 2012 161903 A ist eine Vorrichtung zu entnehmen, bei der innerhalb eines Trägerelements ein an einer Führungsschiene längsverschieblich gehaltenes Schieberelement angeordnet ist. Am Schieberelement ist eine Schelle befestigt, die durch eine obere Längsöffnung des Trägerelements heraussteht und die ein Schlauchpaket hält. Die gesamte Vorrichtung ist zudem um einen Roboterarm drehbar angeordnet, so dass sowohl eine Drehbewegung als auch eine Längsbewegung ermöglicht ist.

Bei derartigen Vorrichtungen wird häufig aus Platzgründen eine möglichst kleinbauende Ausgestaltung angestrebt, gleichzeitig sollen jedoch möglichst große Ausgleichslängen verwirklicht werden. Um diese zunächst gegenläufigen Anforderungen zu verwirklichen, ist beispielsweise aus der WO2009/068239 A1 oder der WO2005/123350 A1 jeweils eine Vorrichtung zu entnehmen, bei der das gesamte Schlauchpaket innerhalb der Vorrichtung umgelenkt wird.

Bei kleinbauenden Vorrichtungen besteht weiterhin das Problem, dass eine ausreichend hohe Rückstellkraft insbesondere auch in der eingefahrenen Endposition ausgeübt werden muss, um ein sicheres Zurückholen des Schlauchpaktes in diese eingefahrene Endposition zu gewährleisten. Dies bedeutet, dass die elastische Rückstelleinheit mit einer vergleichsweise großen Vorspannung eingestellt werden muss, welche die Rückstellkraft an der eingefahrenen Position bestimmt. Die elastischen Rückstelleinheiten, wie beispielsweise Schraubenfedern, unterliegen dabei typischerweise dem Hookeschen Gesetz, die Rückstellkraft steigt daher linear mit dem Weg. Bei kurzen Baulängen und einer erforderlichen hohen Rückstellkraft an der eingefahrenen Position bedeutet dies, dass eine vergleichsweise hohe Federhärte erforderlich ist, was dazu führt, dass die Kraft beim Ausfahren in unerwünschter Weise sehr stark zunimmt.

Ausgehend hiervon liegt der Erfindung die Aufgabe zugrunde, eine verbesserte Vorrichtung zur Führung von zumindest einer Leitung eines Gelenkarmroboters, insbesondere eines Schlauchpakets eines Industrieroboters sowie einen solchen Gelenkarmroboter, insbesondere Industrieroboter, anzugeben.

Die Aufgabe wird erfindungsgemäß gelöst durch eine Vorrichtung mit den Merkmalen des Anspruchs 1.

Die Vorrichtung weist eine Rückstellmechanik zur Ausübung einer insbesondere elastischen Rückstellkraft auf eine Leitung aus. Diese Rückstellmechanik weist dabei eine Führungseinheit und ein Schieberelement auf, das an der Führungseinheit verschieblich zwischen einer ersten und einer zweiten Position gehalten ist. Mit dem Schieberelement ist ein Befestigungselement zur Fixierung der Leitung verbunden. Weiterhin ist eine elastische Rückstelleinheit angeordnet, die zwischen der Führungseinheit und dem Schieberelement wirkend angeordnet ist, also eine Rückstellkraft auf das Schieberelement ausübt. Die elastische Rückstelleinheit umfasst ein vorzugsweise an der Führungseinheit gehaltenes Umlenkelement sowie ein biegeflexibles, strangförmiges Verbindungselement, welches um das Umlenkelement geführt und mit dem Schieberelement verbunden ist. Über dieses biegeflexible, strangförmige Verbindungselement wird die elastische Rückstellkraft auf das Schieberelement ausgeübt.

Unter biegeflexibles, strangförmiges Verbindungselement werden zunächst alle Elemente verstanden, die ein Umlenken um das Umlenkelement, insbesondere um 180°, erlauben und die zudem zur Übertragung der erforderlichen Kräfte bei einem Industrieroboter geeignet sind. Bei diesem strangförmigen Verbindungselement handelt es sich dabei insbesondere um seil-, band- oder auch riemenartige Elemente. Unter elastische Rückstelleinheit wird eine Einheit oder Baugruppe verstanden, welche eine elastische Rückstellkraft auf das Schieberelement ausübt. Unter Schieberelement wird allgemein ein Führungs- oder Gleitelement verstanden, welches das Befestigungselement für die Leitung entlang einer vorgegebenen Bahn führt und mit der Rückstelleinheit zur Übertragung der Rückstellkraft auf das Befestigungselement verbunden ist. Das Schieberelement ist insbesondere nach Art eines geführten Schlittens ausgebildet.

Aufgrund der Anordnung des biegeflexiblen, strangförmigen Verbindungselements und dessen Umlenkung wird bei kompakter Bauweise eine geeignete Einstellung der Rückstellkraft ermöglicht. Aufgrund der Umlenkung wird der Verstellweg für die elastische Rückstelleinheit insgesamt vergrößert, sodass also eine Art Übersetzung verwirklicht ist, zwischen der tatsächlichen Verstellbewegung des Schlauchpakets und der Verstellbewegung des elastischen Rückstellelements. Hierdurch wird die Einstellung einer ausreichenden Rückstellkraft einerseits in der zurückgezogenen Position und gleichzeitig eine nicht zu hohe Rückstellkraft in der ausgezogenen Position problemlos ermöglicht. Es kann daher eine geeignete Federhärte der elastischen Rückstelleinheit ausgewählt werden. Diese ist im Vergleich zu einer übersetzungsfreien Ausführungsvariante daher insgesamt geringer. Die Rückstellkraft liegt dabei - je nach Anwendungsfall - bevorzugt im Bereich von 40N bis 250N und ist über den gesamten Verstellweg vorzugsweise zumindest annähernd konstant.

In zweckdienlicher Weiterbildung ist das Verbindungselement selbst elastisch und übt die elastische Rückstellkraft aus. Das Verbindungselement ist also insgesamt elastisch dehnbar. Es ist dabei beispielsweise nach Art eines Gummibandes ausgebildet. Es weist insbesondere eine lineare Spannungscharakteristik auf, das heißt die ausgeübte Rückstellkraft nimmt proportional zur Dehnung zu.

Bei dem Umlenkelement handelt es sich dabei vorzugsweise um eine Umlenkrolle, welche gelagert ist, um die Reibungskräfte für die Umlenkung des Verbindungselements möglichst gering zu halten.

In bevorzugter Weiterbildung ist zumindest ein weiteres Umlenkelement, insbesondere ebenfalls eine Umlenkrolle, angeordnet, wobei das Verbindungselement um die mehreren Umlenkelemente geführt ist. Durch die mehrfache Umlenkung wird das Übersetzungsverhältnis zwischen dem Verstellweg der zumindest einen Leitung und dem Verstellweg des Verbindungselements weiter erhöht.

Zweckdienlicherweise ist ein weiteres biegeflexibles, strangförmiges Verbindungselement parallel zum ersten Verbindungselement angeordnet. Auch diese Maßnahme dient für eine verbesserte Anpassung der Rückstellkraft. Bei einer zentralen Führung des Schieberelements sind die beiden Verbindungselemente vorzugsweise beidseitig zum Schieberelement angeordnet, sodass eine gleichmäßige, drehmomentfreie Übertragung der Rückstellkraft auf das Schieberelement verwirklicht ist.

Das Schieberelement selbst ist zweckdienlicherweise in einer Führungsschiene längsverschieblich gelagert. Die Führungsschiene ist dabei ein Teil der Führungseinheit und mit dieser verbunden oder an dieser ausgeformt. Für eine möglichst reibungsarme Führung ist das Schieberelement dabei über eine Wälzlagereinheit gelagert. Diese weist hierzu zweckdienlicherweise einen Käfig mit Wälzlagern auf, wobei der Käfig innerhalb der Führungsschiene längsverschieblich geführt ist und das Schieberelement wiederum im oder am Käfig längsverschieblich geführt ist. Die Führungsschiene ist dabei insbesondere mittig auf der Führungseinheit angeordnet, und es sind genau zwei Verbindungselemente angeordnet, die parallel zu der mittigen Führungsschiene verlaufen. Jedem Verbindungselement ist dabei zumindest eine Umlenkrolle zugeordnet.

Das Verbindungselement ist generell mit einem Ende an einem Fixierpunkt; an der Führungseinheit befestigt. Über die Positionierung des Fixierpunktes und/oder der Wahl der Federrate der elastischen Rückstelleinheit lässt sich die Vorspannung geeignet für den jeweiligen Anwendungsfall einstellen. Der Fixierpunkt ist dabei zweckdienlicherweise zur Einstellung der Vorspannung der elastischen Rückstelleinheit verstellbar. Dadurch besteht die Möglichkeit vor Ort, also bei der Montage am Industrieroboter, eine bestmögliche Einstellung zu erzielen. Hierzu sind zweckdienlicherweise an der Führungseinheit unterschiedliche Befestigungsmöglichkeiten für das Fixierelement vorbereitet, beispielsweise in Form von mehreren einzelnen Bohrlöchern oder in Form eines Langlochs, innerhalb dessen das Fixierelement verstellbar ist etc.

Die Führungseinheit weist weiterhin zweckdienlicherweise eine Bodenplatte auf, an der die Führungsschiene befestigt ist. Die Bodenplatte ist weiterhin vorzugsweise als Montageplatte zur Montage auf einem Roboterarm ausgebildet ist. Als solche weist sie zweckdienlicherweise Bohrlöcher auf, über die eine Befestigung mittelbar oder auch unmittelbar an einem Roboterarm ermöglicht ist.

Weiterhin ist an der Führungseinheit zweckdienlicherweise eine Führungsschelle befestigt, und zwar im Vergleich zu dem Schieberelement ortsfest. Durch diese Führungsschelle ist die Leitung, also das Schlauchpaket, im montierten Zustand gleitverschieblich geführt.

Gemäß einer alternativen Ausführungsvariante ist das Verbindungselement mit einem elastischen Rückstellelement verbunden, über welches die Rückstellkraft ausgeübt wird. Bei diesem Rückstellelement handelt es sich vorzugsweise um eine Spiralfedereinheit. Auch in diesem Fall wird durch den verlängerten Weg des Verbindungselements der Verstellweg dieser Spiralfedereinheit in geeigneter Weise verlängert. Das Verbindungselement selbst weist in diesem Fall keine oder nur eine geringfügige Dehnbarkeit auf. Es ist beispielsweise als ein Seil ausgebildet.

In zweckdienlicher Weiterbildung ist ein unrundes oder exzentrisch gelagertes Drehelement angeordnet, um das das Verbindungselement geführt und mit diesem befestigt ist, sodass bei einer Bewegung des Verbindungselements dies zu einer Drehbewegung des Drehelements führt. Durch dessen unrunde Ausführung oder durch seine exzentrische Lagerung führt dies zu einer Veränderung eines Hebelarms zwischen einem Angriffspunkt des Verbindungselements und einer Drehachse des Drehelements. Die Veränderung ist dabei derart eingestellt, dass eine auf das Schieberelement wirkende Rückstellkraft zumindest weitgehend konstant ist, unabhängig von der aktuellen Position des Schieberelements.

Gemäß einer bevorzugten Ausgestaltung ist die Führungseinheit weiterhin gekrümmt ausgebildet. Das gesamte Schlauchpaket wird daher mithilfe der Vorrichtung entlang einer vorgegebenen gekrümmten Bewegungsbahn entlang geführt. Dies ist in einigen Anwendungsgebieten beispielsweise in der Medizintechnik von besonderem Vorteil, bei denen das Schlauchpaket in definierter Weise entlang einer gekrümmten Bahn geführt werden soll.

Insbesondere bei einer derartigen Ausgestaltung ist das Umlenkelement gelenkig beispielsweise über ein Kugelgelenk an der Führungseinheit gelagert. Dadurch stellt sich das Umlenkelement mit seiner Orientierung optimal auf die jeweiligen Gegebenheiten der Führung des Verbindungselements ein.

In besonders zweckdienlicher Ausgestaltung ist die Rückstellmechanik in einem Gehäuse eingehaust, welches eine sich in Längsrichtung erstreckende schlitzförmige Öffnung aufweist, über die ein Befestigungselement zur Befestigung der zumindest einen Leitung, also das Schlauchpaket, mit dem innerhalb des Gehäuses angeordnete Schieberelements verbunden ist. An oder innerhalb dieser schlitzförmigen Öffnung ist das Befestigungselement verschieblich. Dadurch ist insgesamt eine sehr kompakte Ausgestaltung ermöglicht bei gleichzeitigem Schutz der Rückstellmechanik. Die Rückstellmechanik umfasst hierbei insbesondere die Führungseinheit mit den daran befestigten Umlenkelementen sowie das Schieberelement und das Verbindungselement.

Im Unterschied zu den Ausführungsvarianten wie sie beispielsweise aus der WO2009/068239 A1 oder der DE 10 2004 028 577 A1 zu entnehmen sind, wird daher nicht mehr das Schlauchpaket als solches in das Gehäuse eingeführt. Vielmehr ist die Rückstellmechanik entkoppelt vom Schlauchpaket in einem separaten Gehäuse geschützt eingelegt. Die Verbindung erfolgt lediglich über eine schlitzförmige Öffnung, an der das Befestigungselement entlang fährt.

Zweckdienlicherweise umfasst das Gehäuse dabei zwei gegenüberliegende schlitzförmige Öffnungen und das Befestigungselement weist einen Bügel mit zwei gegenüberliegenden Bügelarmen auf, die jeweils über die beiden Öffnungen in das Gehäuse hinein reichen. Hierdurch wird eine zuverlässige Führung des Schlauchpakets erzielt, insbesondere ohne dass Verkippmomente in die Rückstellmechanik eingeleitet werden.

Zweckdienlicherweise umfasst das Gehäuse als Boden die bereits erwähnte Bodenplatte sowie einen Gehäusedeckel, welcher die auf der Bodenplatte angebrachte Rückstellmechanik vollständig überdeckt. Die gesamte Rückstellmechanik ist daher von dem Gehäusedeckel überdeckt.

Der Bügel übergreift dabei vorzugsweise den Gehäusedeckel in etwa nach Art eines U- oder C-Arms, wobei in seiner Mitte, also oben auf dem Gehäusedeckel, zweckdienlicherweise eine Schelle zur Fixierung der zumindest einen Leitung, insbesondere des Schlauchpakets angeordnet ist.

Die Aufgabe wird weiterhin gelöst durch einen Gelenkarmroboter mit einer derartigen Vorrichtung. Die Vorrichtung ist dabei bei einem mehrachsigen Industrieroboter insbesondere auf einem Roboterarm nachfolgend zu der so genannten Achse 3 in Richtung zu einer Roboterhand befestigt und zweckdienlicherweise im hinteren Bereich des Roboterarms, also nahe an der Achse 3.

Ausführungsbeispiele der Erfindung werden nachfolgend anhand der Figuren näher erläutert. Diese zeigen:
- Fig. 1A: in schematischer Darstellung einen Industrieroboter mit einer Vorrichtung zur Führung eines Schlauchpakets, wobei sich das Schlauchpaket in einer zurückgefahrenen Ausgangsposition befindet,
- Fig. 1B: eine schematische Darstellung des Industrieroboters gemäß Fig. 1a, wobei sich das Schlauchpaket in einer vollständig ausgefahrenen Position befindet,
- Fig. 2: eine perspektivische Darstellung einer Vorrichtung zur Führung eines Schlauchpakts gemäß einer ersten Ausführungsvariante,
- Fig. 3: eine Rückstellmechanik in perspektivischer Darstellung der in Fig. 2 dargestellten Vorrichtung,
- Fig. 4: eine Seitenansicht der in Fig. 3 dargestellten Rückstellmechanik,
- Fig. 5: eine Aufsicht auf die in Fig. 2 dargestellte Rückstellmechanik,
- Fig. 6: eine Aufsicht auf eine Führungsschiene der Rückstellmechanik,
- Fig. 7: eine perspektivische Aufsicht auf eine Rückstellmechanik einer zweiten Ausführungsvariante,
- Fig. 8: eine ausschnittsweise Darstellung einer weiteren Ausführungsvariante einer Führungsschiene der Rückstellmechanik,
- Fig. 9: eine dritte Ausführungsvariante in perspektivischer Darstellung der Rückstellmechanik,
- Fig. 10: eine vierte Ausführungsvariante der Rückstellmechanik sowie
- Fig. 11: eine Grafik zur Illustration des Verlaufs der Rückstellkraft.

In den Figuren sind gleichwirkende Teile mit den gleichen Bezugszeichen versehen.

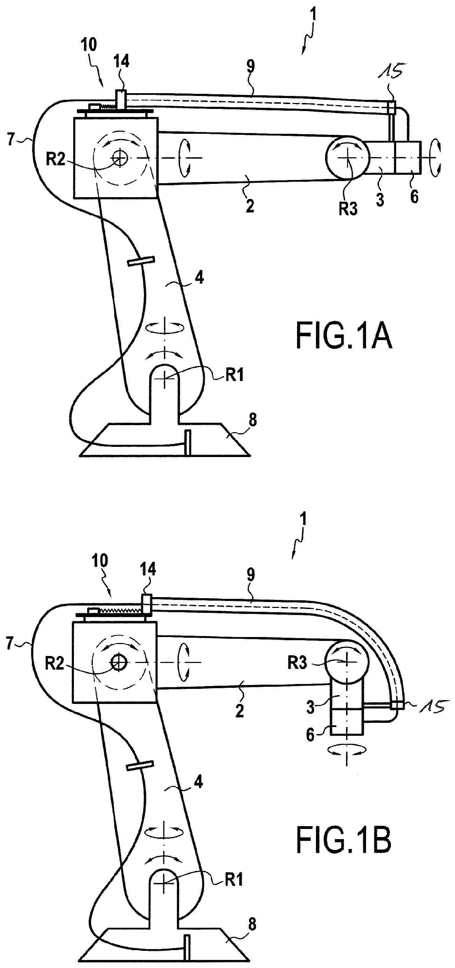

In den Fig. 1A, 1B ist ein Gelenkarmroboter in zwei unterschiedlichen Positionen dargestellt. Bei diesem Gelenkarmroboter 1 handelt es sich beispielsweise um einen mehrachsigen Industrieroboter, insbesondere um einen sechsachsigen Industrieroboter oder auch einen Medizinroboter. Dieser weist eine Basis 8, ein erstes auch als Schwinge 4 bezeichnetes Segment auf, welche mit der Basis 8 über eine erste Gelenkverbindung R1 verbunden ist. Um diese erste Gelenkverbindung R1 ist die Schwinge 4 um eine horizontale Achse verschwenkbar. Ergänzend ist die Schwinge 4 üblicherweise um eine vertikale Achse relativ zur Basis 8 verschwenkbar. Die Schwinge 4 erstreckt sich in etwa in vertikaler Richtung nach oben. An einer zweiten Gelenkverbindung R2 ist ein zweites Segment, allgemein als Roboterarm 2 bezeichnet, um eine so genannte "Achse 3" schwenkbeweglich mit der Schwinge 4 verbunden. Schließlich ist als drittes Segment eine Roboterhand 3 über eine dritte Gelenkverbindung R3 mit dem zweiten Segment 2 verbunden. An der Roboterhand 3 ist schließlich ein Bearbeitungswerkzeug 6, wie beispielsweise eine Schweißzange etc. angebracht. Ein derartiger Industrieroboter 1 weist insgesamt sechs unterschiedliche Bewegungsfreiheitsgrade auf.

Zur Versorgung des Bearbeitungswerkzeugs 6 mit Elektrizität und/oder Fluiden und/oder Datensignalen weist der Industrieroboter 1 ein Versorgungsleitungspaket 7 auf, welches am Roboterarm 2 entlanggeführt und von dort mit der Basis 8 verbunden ist. Im Bereich des Roboterarms 2 ist das Versorgungsleitungspaket 7 in einem Schutzschlauch geführt. Das Versorgungsleitungspaket 7 gemeinsam mit dem Schutzschlauch wird nachfolgend auch als Schlauchpaket 9 bezeichnet. Häufig ist im Bereich der zweiten Gelenkverbindung eine Trennstelle für das Versorgungsleitungspaket 7 angeordnet und das Schlauchpaket 9 ist als austauschbare Verschleißeinheit bis zu dieser Trennstelle geführt.

Wie man der Fig. 1B entnehmen kann, wird bei einer Drehbewegung um die dritte Gelenkachse R3 eine Zugbewegung auf das Schlauchpaket ausgeübt. Bei der umgekehrten Bewegung wieder zurück in die Ausgangsposition gemäß der Fig. 1 muss das Schlauchpaket wieder in die Ausgangsposition zurückgezogen werden.

Hierzu ist im Bereich der zweiten Gelenkverbindung R2 auf dem Roboterarm 2 eine Vorrichtung 10 zur Führung und zur Zurückholung des Schlauchpakets 9 befestigt. In den Fig. 1A, 1B ist dieses lediglich stark vereinfacht dargestellt. Zu dieser Vorrichtung 10 ist eine Befestigungsschelle 14 gehörig, in der das Schlauchpaket 9 festgehalten ist, insbesondere formschlüssig, sodass eine von der Vorrichtung ausgeübte Rückstellkraft auf das Schlauchpaket 9 übertragen wird.

An seinem vorderen, zur Roboterhand 3 orientierten Ende ist das Schlauchpaket 9 zusätzlich über eine weitere Befestigungsschelle 15 fixiert, so dass das Schlauchpaket 9 zwischen den beiden Befestigungsschellen 14,15 gespannt gehalten ist. Im Ausführungsbeispiel erstreckt sich das Schlauchpaket 9 zwischen diese beiden Befestigungsschellen 14,15, endet also an diesen. Die einzelnen Leitungen bzw. das Versorgungsleitungspaket 7 tritt an diesen Positionen aus dem Schutzschlauch aus.

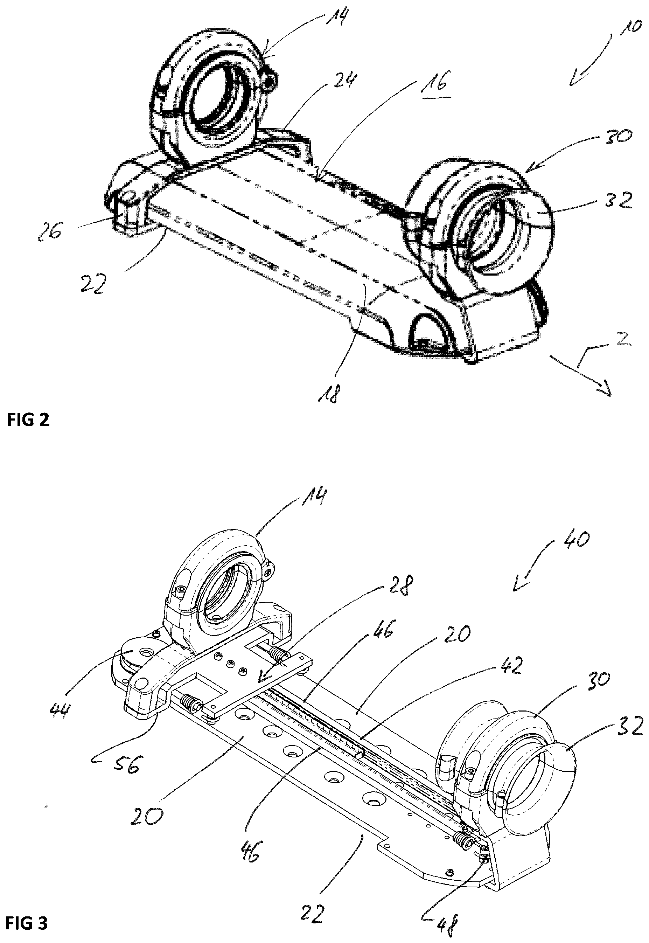

Eine erste Ausführungsvariante der Vorrichtung 10 ist in den Fig. 2 bis 6 dargestellt.

Die Vorrichtung 10 umfasst eine Gehäuse 16, welches einen Gehäusedeckel 18 sowie eine Bodenplatte 20 aufweist. Das Gehäuse 16 weist im Ausführungsbeispiel zwei gegenüberliegende Längsschlitze 22 auf, die sich in Längsrichtung z der Vorrichtung erstrecken. Die Längsrichtung z entspricht zugleich auch der Längsrichtung des Schlauchpakets 9.

Die Befestigungsschelle 14 ist auf einem etwa U- oder C-armförmigen Bügel 24 befestigt, der Bügel 24 verläuft dabei entlang der Oberseite des Gehäusedeckels 18 und weist zwei Bügelarme 26 auf, die im Ausführungsbeispiel mit seitlich hervorstehenden Seitenflanschen eines Schieberelements 28 verbunden sind. Wie später noch näher erläutert wird, ist der Bügel 24 zusammen mit der Befestigungsstelle 14 entlang der Längsschlitze 22 verschieblich gelagert. Der Bügel 24 bildet im Ausführungsbeispiel zusammen mit der Befestigungsschelle 14 ein Befestigungselement, an dem das Schlauchpaket 9 gehalten ist.

Am der Befestigungsschelle 14 gegenüberliegenden Ende der Vorrichtung 10 ist eine Führungsschelle 30 angeordnet, mit einem Führungseinsatz 32, der sich in beide Richtungen etwa trompetenförmig erweitert. Innerhalb dieses Führungseinsatzes 32 ist im montierten Zustand das Schlauchpaket 9 gleitverschieblich geführt. Demgegenüber ist das Schlauchpaket 9 in der Befestigungsschelle 14 ortsfest fixiert, insbesondere durch einen Formschluss. Hierzu ist die Befestigungsschelle 14 insbesondere mit einer inneren Ringnut ausgebildet, in die ein entsprechender Ringsteg des Schlauchpakets 9 eingreift. Die Befestigungsschelle 14 und/oder die Führungsschelle 30 sind in hier nicht näher dargestellter Variante derart ausgebildet, dass das Schlauchpaket 9 eine Verkippbewegung relativ zur Längsrichtung 23 ausführen kann. Beide Schellen 14, 30 sind wie aus den Figuren ersichtlich aus zwei über Verbindungselemente (Schrauben) miteinander verbundene Halbschalen ausgebildet. Hierdurch ist ein einfaches Austauschen des Schlauchpakets 9 ermöglicht.

Im Inneren des Gehäuses 16 ist eine Rückstellmechanik 40 ausgebildet, welche das bereits erwähnte Schieberelement 28, eine Führungsschiene 42, erste Umlenkrollen 44 sowie ein elastisches, seilartiges Verbindungselement 46 umfasst. Durch die Führungsschiene 42 zusammen mit der Bodenplatte 20 ist eine Führungseinheit zur Führung des Schlauchpakets 9 gebildet. Diese Führungseinheit ist am Industrieroboter 1 im montierten Zustand fixiert, beispielsweise angeschraubt. Bei dem Verbindungselement 46 handelt es sich beispielsweise um ein elastisches Seil, ein elastisches Band oder ein sonstiges elastisches, biegeflexibles Element. Das eine Ende des Verbindungselements 46 ist an einem Fixierelement 48 befestigt, welches ortsfest an der Bodenplatte 20 gehalten ist, die ebenfalls Teil der Rückstellmechanik 40 ist. Das andere Ende des Verbindungselements 46 ist am Schieberelement 28 befestigt. Das Verbindungselement 46 wird zuvor jedoch um die erste Umlenkrolle 44 geführt, die im Wesentlichen am gegenüberliegenden Ende der Bodenplatte 20 an dieser befestigt ist.

Im Ausführungsbeispiel sind insgesamt zwei Verbindungselemente 46 angeordnet, die jeweils symmetrisch zueinander bezüglich einer Mittenlängsachse der Vorrichtung 10 angeordnet und ausgebildet sind, sodass sich eine gleichmäßige Krafteinwirkung auf das Schieberelement 28 ergibt. Die Enden der beiden Verbindungselemente 46 greifen an seitlich abstehenden Armen des Schieberelements 28 an. Die beiden Verbindungselemente 46 verlaufen dabei beidseits der mittig angeordneten Führungsschiene 42.

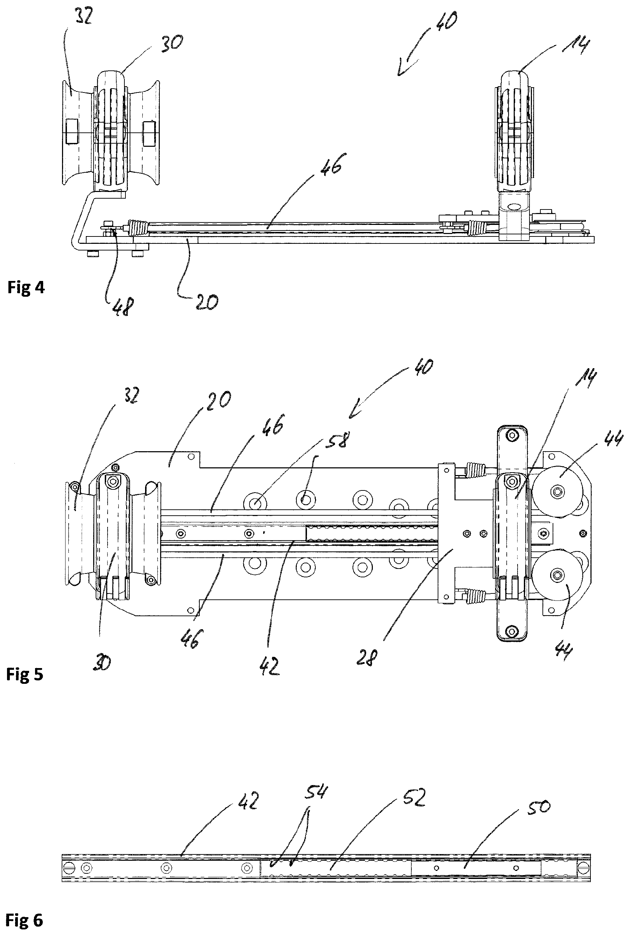

Das Schieberelement 28 ist innerhalb der Führungsschiene 42 mithilfe eines Gleitelements 50 gelagert, insbesondere kugelgelagert. Wie insbesondere aus der Figur 6 hervorgeht, ist das Gleitelement 50 innerhalb eines Käfigs 52 verschieblich angeordnet, wobei der Käfig 52 eine Vielzahl von Wälzkörpern, insbesondere Kugeln 54, aufnimmt. Der Käfig 52 selbst zusammen mit den Kugeln 54 ist wiederum innerhalb der Führungsschiene 42 verschieblich gelagert. Der Käfig 52 erstreckt sich etwa über die Hälfte der Länge der Führungsschiene 42. Das nach Art eines Nutsteins ausgebildete Gleitelement 50 ist Teil des Schieberelements 28. Oberhalb der Führungsschiene 42 ist das Schieberelement 28 plattenförmig ausgebildet. Das Gleitelement 50 ist dabei vorzugsweise über mehrere Schrauben an dieser Platte befestigt.

Wie insbesondere aus der Fig. 3 zu entnehmen ist, weist die Befestigungsplatte 20 seitlich nach unten abgekröpfte Laschen auf, die in etwa eine Stufe ausbilden, mit endseitigen Laschen 56, an denen der Bügel 24 befestigt ist. Die Laschen 26 sind dabei in etwa auf dem Niveau der Bodenplatte 20 herunter geführt und sind durch die Längsschlitze 22 nach außen geführt. Die Längsschlitze 22 sind durch Rücksprünge in der Bodenplatte 20 ausgebildet.

Wie weiterhin aus der Fig. 4 zu entnehmen ist, ist die Führungsschelle 30 im Endbereich der Bodenplatte 20, in dem auch das Fixierelement 48 befestigt ist, mit der Bodenplatte 20 verbunden. In der Bodenplatte 20 sind mehrere Befestigungslöcher 58 ausgebildet, über die eine Befestigung der gesamten Vorrichtung 10 auf dem Industrieroboter 1 erfolgt. Durch die Vielzahl der Befestigungslöcher 58 kann dabei die Vorrichtung 10 an unterschiedliche Industrieroboter 1 mit verschiedenen Lochbildern angepasst oder auch an verschiedenen Positionen angeordnet werden. Die Bodenplatte 20 definiert daher zugleich eine Montageplatte.

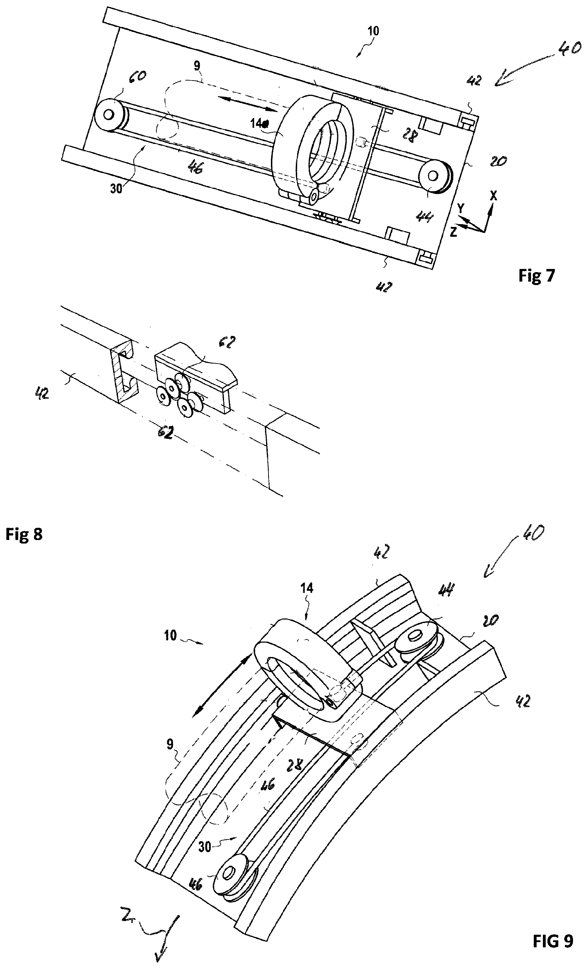

Die Fig. 7 zeigt eine alternative Ausführungsvariante der Rückstellmechanik 40, die vom Funktionsprinzip vergleichbar zu der ersten Ausführungsvariante ist. Im Unterschied zu dieser ist nunmehr eine zweite Umlenkrolle 60 an der Bodenplatte 20 befestigt, sodass die beiden Umlenkrollen 44, 60 an gegenüberliegenden Enden der Bodenplatte 20 angeordnet sind und das elastische Verbindungselement 46 zweifach umgelenkt ist. Anstelle der mittigen Platzierung sind nunmehr zwei randseitige Führungsschienen 42 ausgebildet, sodass die Bodenplatte 20 zusammen mit diesen Führungsschienen 42 im Querschnitt betrachtet eine etwa U-förmige Führungseinheit bilden. Das Schieberelement 28 ist beidseitig in den beiden Führungsschienen 42 gelagert. Wie aus Fig. 8 hervorgeht, erfolgt hierbei insbesondere eine Lagerung mithilfe von Laufrollen 62, die in der Führungsschiene 42 entlang laufen. Die Führungsschiene 42 ist hierbei in etwa als ein C-Profil ausgebildet und es sind insgesamt drei Laufrollen 62 angeordnet, die sich einerseits nach oben und nach unten an den C-Profil abstützen. Die Längsrichtung entspricht der in der Figur eingezeichneten z-Richtung. Die Befestigungsschellen 14 aller hier beschriebenen Ausführungsvarianten sind vorzugsweise in x- und / oder y-Richtung leicht verkippbar.

In Fig. 9 ist eine abgewandelte Ausführungsvariante der Rückstellmechanik 40 entsprechend der Fig. 7 dargestellt. Im Unterschied zu der Ausführungsvariante gemäß der Fig. 7 ist nunmehr die Bodenplatte 20 und damit die Führungseinheit gebildet aus der Bodenplatte 20 mit den Führungsschienen 42 gekrümmt ausgebildet, sodass also eine Verschiebung der Befestigungsschelle 14 entlang einer gekrümmten Bahn verläuft. Die Umlenkrollen 44, 60 sind dabei beispielsweise gelenkig an der Bodenplatte 20 befestigt.

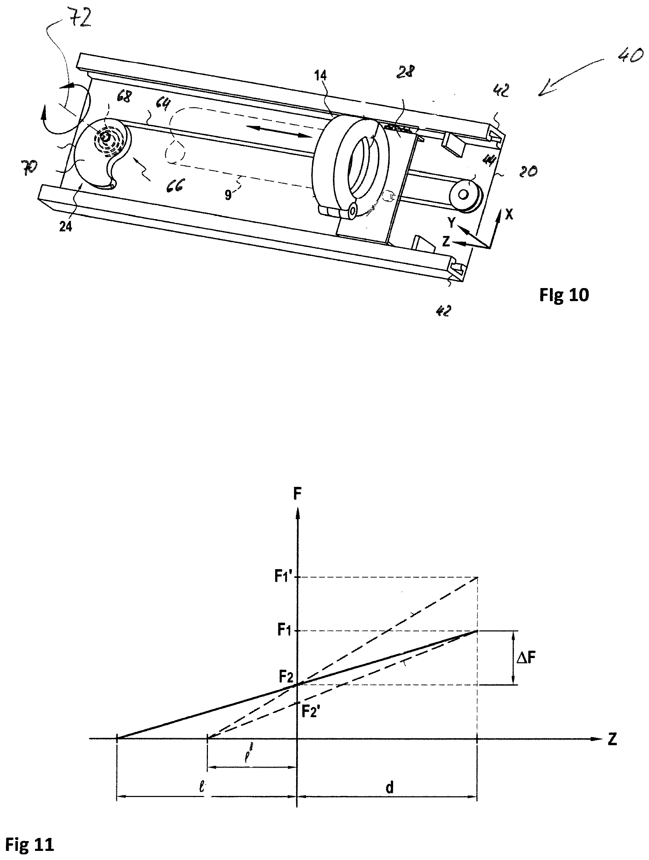

Schließlich ist in Fig. 10 noch eine weitere Ausführungsvariante der Rückstellmechanik 40 dargestellt. Auch diese zeigt wieder randseitig angeordnete Führungsschienen 42 mit dem über die Laufrollen 62 gelagerten Schieberelement 28. Während bei den bisherigen Ausführungsvarianten das Verbindungselement 46 selbst elastisch ausgebildet war, ist es nunmehr als nicht elastisches, nicht dehnbares Verbindungselement 64 ausgebildet.

Das eine Ende des Verbindungselements 64 ist dabei an einem elastischen Rückstellelement 66 befestigt. Dieses umfasst zur Ausübung der elastischen Rückstellkraft ein Federelement, welches insbesondere als Spiralfeder 68 ausgebildet ist. Ergänzend umfasst das Rückstellelement 66 noch ein drehbar gelagertes Drehelement 70, welches um eine exzentrische Achse 72 drehbar ist. Die exzentrische Achse 72 definiert zugleich die Zentralachse der Spiralfeder 68. Das Verbindungselement 64 ist um das Drehelement 70 in einer entsprechenden Nut herumgeführt und am Drehelement 70 befestigt.

Zwischen dem Befestigungspunkt des Verbindungselements am Drehelement 70 und der Achse 72 ist insofern ein Hebelarm ausgebildet, sodass über das Verbindungselement 64 ein Drehmoment auf die Spiralfeder 68 übertragen wird. Die Spiralfeder 68 ist mit ihrem einen Ende an der Achse 72 und mit ihrem anderen Ende am Drehelement 70 befestigt. Zweckdienlicherweise ist die Ausgestaltung des Drehelements 70 derart ausgebildet, dass bei einer Verschiebung des Schieberelements 28 die auf dieses und damit auf die Befestigungsschelle 14 ausgeübte Rückstellkraft konstant bleibt. Eine Zunahme der elastischen Rückstellkraft der Spiralfeder 68 wird daher durch eine Verringerung beispielsweise des Hebelarms über das Drehelement 70 kompensiert. Zweckdienlicherweise ist daher über den gesamten Verstellweg der Befestigungsklemme 14 die auf diese einwirkende Rückstellkraft konstant.

Bei den in den Figuren 7 bis 10 dargestellten Ausführungsvarianten der Rückstellmechanik mit den beiden außen liegenden Führungsschienen 42 ist ebenfalls eine Ausführungsvariante ähnlich der in Fig. 2 mit dem Gehäuse 16 ermöglicht. Die Rückstellmechaniken 40 aller Ausführungsbeispiele lassen sich daher in ein Gehäuse 16 integrieren. Es können auch weitere Rückstellmechaniken 40 beispielsweise ohne Umlenkelemente 44, 60 und beispielsweise mit Schraubenfedern angeordnet werden. Im Unterschied zu der Ausführungsvariante der Fig. 2 wäre in diesem Fall der Längsschlitz 22 nicht seitlich sondern an der Oberseite des Gehäusedeckels 18 angeordnet, sodass die Befestigungsschelle 14 oberhalb des Gehäusedeckels 18 verläuft.

Bei allen Ausführungsvarianten handelt es sich bei den Rückstellmechaniken 40 um vorgespannte Rückstellmechaniken, die also bereits in der Grundstellung, also bei einer Position z=0 eine Rückstellkraft F ausüben (vgl. Koordinatensystem in Fig. 10 in Verbindung mit Fig. 11).

Aufgrund der Umlenkung des Verbindungselements 46, 66 und insbesondere des elastischen Verbindungselements 46 lässt sich die Länge und damit die Kraft der Vorspannung ohne Weiteres einstellen, ohne dass diese durch die Dimensionen der Vorrichtung 10 festgelegt ist.

Diese Situation wird in Fig. 11 dargestellt, bei der die Rückstellkraft F gegenüber einer Ausdehnung in Längsrichtung z für unterschiedliche Situationen dargestellt ist. Die Position z = 0 (Kreuzungspunkt der beiden Achsen des Koordinatensystems) definiert dabei eine Vorspannkraft F₂. Die Rückstellkraft der elastischen Rückstelleinheit ist linear, sodass mit zunehmender Ausdehnung in Längsrichtung z die Kraft F linear entsprechend einer durch die elastische Rückstelleinheit vorgegebenen Federrate zunimmt. Die maximale Auszugslänge ist in der Fig. 11 mit d bezeichnet, also die Auszugslänge zwischen der rückgezogenen und der ausgezogenen Position. In der ausgezogenen Position wird eine Rückstellkraft F₁ erreicht. Auf der negativen z-Achse ist die Variationsmöglichkeit der Längeneinstellung für insbesondere das Verbindungselement 46, 66 dargestellt, welches durch die Umlenkrollen 44, 60 und eine Verstellmöglichkeit des Fixierelements 48 gegeben ist. Die Länge des Verbindungselements 46, 66 in der nicht ausgezogenen Grundposition ist in der Fig. 5 als Vorspannlänge I dargestellt. Bei einer lediglich kleinen Vorspannlänge I' ist eine vergleichsweise hohe Federrate, also hohe Steigung erforderlich, um die gewünschte Vorspannung F₂ zu erreichen. Dies führt jedoch bei einem weiteren Ausziehen, also versetzten der Befestigungsschelle 14 in Längsrichtung z, zu einer starken Zunahme der Rückstellkraft F, sodass im Ausführungsbeispiel der Fig. 11 eine (zu) hohe Rückstellkraft F_{1'} in der ausgezogenen Position erreicht werden würde. Eine Verringerung der Federrate, so dass lediglich eine gewünschte Rückstellkraft F₁ erreicht wird, führt jedoch zu einer zu geringen Vorspannkraft F_{2'} in der zurückgezogenen Position.

Wird demgegenüber eine längere Vorspannlänge I eingestellt, so wird die gleiche Vorspannung F₂ bereits bei deutlich geringerer Steigung und damit geringerer Federrate erzielt, sodass die Kraftzunahme ΔF=F₁-F₂ über den Verstellweg d hinweg deutlich geringer ist und am Ende die gewünschte Rückstellkraft F₁ erreicht ist. Insgesamt lässt sich daher durch diese Maßnahme, also der Einstellung der Vorspannlänge I, in geeigneter Weise die Vorspannkraft F₂ sowie auch die Rückstellkraft F₁ am Ende des Verfahrwegs d in geeigneter Weise einstellen. Auch wird hierüber das Verhältnis der Vorspannkraft F₂ zur Rückstellkraft F₁ und damit die Kraftzunahme ΔF eingestellt. Durch die Umlenkung des Verbindungselements 46, 66 lässt sich in geeigneter Weise eine definierte Vorspannung mit einer Vorspannkraft F₂ auch bei kurzer Baulänge der Vorrichtung 10 einstellen. Das Verbindungselement 46 ist insbesondere selbst als elastisches Element zur Ausübung der Rückstellkraft ausgebildet.

**Bezugszeichenliste**

| | | | |
|---|---|---|---|
| 1 | Industrieroboter | 46 | elastisches Verbindungselement |
| 2 | Roboterarm | | |
| 3 | Roboterhand | 48 | Fixierelement |
| 4 | Schwinge | 50 | Gleitelement |
| 6 | Bearbeitungswerkzeug | 52 | Käfig |
| 7 | Versorgungsleitungspaket | 54 | Kugeln |

| | | | |
|---|---|---|---|
| 8 | Basis | 56 | Lasche |
| 9 | Schlauchpaket | 58 | Befestigungslöcher |
| 10 | Vorrichtung | 60 | zweite Umlenkrolle |
| 14 | Befestigungsschelle | 62 | Laufrolle |
| 16 | Gehäuse | 64 | nichtelastisches Verbindungselement |
| 18 | Gehäusedeckel | | |
| 20 | Bodenplatte | 66 | elastisches Rückstellelement |
| 22 | Längsschlitz | 68 | Spiralfeder |
| 24 | Bügel | 70 | Drehelement |
| 26 | Bügelarm | 72 | exzentrische Achse |
| 28 | Schieberelement | | |
| 30 | Führungsschelle | R₁ | erste Gelenkverbindung |
| 32 | Führungseinsatz | R₂ | zweite Gelenkverbindung |
| 40 | Rückstellmechanik | R₃ | dritte Gelenkverbindung |
| 42 | Führungsschiene | z | Längsrichtung |
| 44 | erste Umlenkrolle | | |

## Patentansprüche

1. Vorrichtung (10) zur Führung von zumindest einer Leitung eines Gelenkarmroboters, insbesondere zur Führung eines Schlauchpaketes (9) eines Industrieroboters (1), mit einer Rückstellmechanik (40) zur Ausübung einer Rückstellkraft auf die Leitung, wobei die Rückstellmechanik (40) aufweist
- eine Führungseinheit (42, 20) und ein Schieberelement (28), wobei das Schieberelement (28) mit einem Befestigungselement zur Fixierung der Leitung verbunden ist und an der Führungseinheit (42, 20) verschieblich zwischen einer ersten und einer zweiten Position gehalten ist,
- eine elastische Rückstelleinheit, die zwischen der Führungseinheit (42, 20) und dem Schieberelement (28) wirkend angeordnet ist, um auf das Schieberelement (28) eine Rückstellkraft auszuüben, **dadurch gekennzeichnet, dass**
die Rückstelleinheit zumindest ein Umlenkelement (44) sowie ein biegeflexibles strangförmiges Verbindungselement (46, 64) aufweist, welches um das Umlenkelement (44) geführt und mit dem Schieberelement (28) sowie mit der Führungseinheit (42,20) verbunden ist, wobei das Verbindungselement generell mit einem Ende an einem Fixierpunkt an der Führungseinheit (42, 20) befestigt ist.

2. Vorrichtung (10) nach Anspruch 1,
**dadurch gekennzeichnet,**
**dass** das Verbindungselement (46) elastisch ist und die Rückstellkraft ausübt.

3. Vorrichtung (10) nach einem der vorhergehenden Ansprüche 1 oder 2,
**dadurch gekennzeichnet,**
**dass** zumindest ein weiteres Umlenkelement (60) angeordnet ist und das Verbindungselement (46, 64) um die mehreren Umlenkelemente (44, 60) geführt ist.

4. Vorrichtung (10) nach einem der vorhergehenden Ansprüche,
**dadurch gekennzeichnet,**
**dass** ein weiteres biegeflexibles und strangförmiges Verbindungselement (46, 64) parallel zum ersten Verbindungselement (46) geführt ist.

5. Vorrichtung (10) nach einem der vorhergehenden Ansprüche,
**dadurch gekennzeichnet,**
**dass** die Führungseinheit (42, 20) eine Führungsschiene (42) aufweist, in der das Schieberelement (28) längsverschieblich insbesondere über eine Wälzlagereinheit (52,54) gelagert ist.

6. Vorrichtung (10) nach einem der vorhergehenden Ansprüche,
**dadurch gekennzeichnet,**
**dass** das Verbindungselement (46) mit einem Ende an einem Fixierelement (48) befestigt ist, das zur Einstellung einer Vorspannung verstellbar ist.

7. Vorrichtung (10) nach einem der vorhergehenden Ansprüche und nach Anspruch 5,
**dadurch gekennzeichnet,**
**dass** die Führungseinheit (42, 20) eine Bodenplatte (20) aufweist, an der die Führungsschiene (42) insbesondere mittig befestigt ist und die insbesondere als Montageplatte zur Montage auf einem Roboterarm (2) ausgebildet ist.

8. Vorrichtung (10) nach einem der vorhergehenden Ansprüche,
**dadurch gekennzeichnet,**
**dass** an der Führungseinheit (42, 20) eine Führungsschelle (30) ortsfest befestigt ist, durch die die Leitung im montierten Zustand gleitverschieblich geführt ist.

9. Vorrichtung (10) nach einem der vorhergehenden Ansprüche,
**dadurch gekennzeichnet,**
**dass** das strangförmige Verbindungselement (64) mit einem elastischen Rückstellelement (66) verbunden ist.

10. Vorrichtung (10) nach dem vorhergehenden Anspruch,
**dadurch gekennzeichnet,**
**dass** das das strangförmige Verbindungselement (64) um ein unrundes oder exzentrisch gelagertes Drehelement (70) geführt und an diesem befestigt ist, derart, dass bei einer Bewegung des Verbindungselements (64) dies zu einer Drehbewegung des Drehelements (70) und durch dessen unrunder Ausführung oder exzentrische Lagerung zu einer Veränderung eines Hebelarms führt.

11. Vorrichtung (10) nach einem der vorhergehenden Ansprüche,
**dadurch gekennzeichnet,**
**dass** das Umlenkelement (44) gelenkig an der Führungseinheit (42, 20) gelagert ist.

12. Vorrichtung (10) nach einem der vorhergehenden Ansprüche,
**dadurch gekennzeichnet,**
**dass** die Rückstellmechanik (40) in einem Gehäuse (16) eingehaust ist, welches eine sich in Längsrichtung (2) erstreckende schlitzförmige Öffnung (22) aufweist, über die ein Befestigungselement (14, 24) zur Fixierung der Leitung mit dem Schieberelement (28) der im Gehäuse (16) angeordneten Rückstellmechanik (40) verbunden ist.

13. Vorrichtung (10) nach dem vorhergehenden Anspruch,
**dadurch gekennzeichnet,**
**dass** das Gehäuse (16) zwei gegenüberliegende schlitzförmige Öffnungen (22) aufweist und das Befestigungselement (14, 24) einen Bügel (24) mit zwei gegenüberliegenden Bügelarmen (26) umfasst, die jeweils über die beiden Öffnungen (22) mit dem Schieberelement (28) im Gehäuse (16) verbunden sind, und / oder
**dass** die Führungseinheit (42, 20) eine Bodenplatte (20) aufweist, an der eine Führungsschiene (42) befestigt ist, in der das Schieberelement (28) längsverschieblich gelagert ist, wobei das Gehäuse (16) als Boden die Bodenplatte (20) aufweist, sowie einen diese mit der darauf angebrachten Rückstellmechanik (40) vollständig überdeckenden Gehäusedeckel (18).

14. Vorrichtung (10) nach einem der beiden vorhergehenden Ansprüche ,
**dadurch gekennzeichnet,**
**dass** das Befestigungselement (14, 24) eine außerhalb des Gehäuses (16) angeordnete Befestigungsschelle (14) zur Fixierung der Leitung aufweist.

15. Gelenkarmroboter (1) mit einer Vorrichtung nach einem der vorhergehenden Ansprüche.

## Claims

1. Device (10) for guiding at least one line of an articulated-arm robot, in particular for guiding a hose package (9) of an industrial robot (1), with a restoring mechanism (40) for exerting a restoring force on the line, wherein the restoring mechanism (40) has
- a guide unit (42, 20) and a sliding element (28), wherein the sliding element (28) is connected to a fastening element for fixing the line and is held on the guide unit (42, 20) displaceably between a first and a second position,
- a elastic restoring unit, which is arranged to act between the guide unit (42, 20) and the sliding element (28) in order to exert a restoring force on the sliding element (28), **characterized in that**
the restoring unit has at least one deflecting element (44) and a flexurally flexible strand-shaped connecting element (46, 64), which is guided around the deflecting element (44) and is connected to the sliding element (28) and to the guide unit (42, 20), wherein the connecting element is generally secured at one end to a fixing point on the guide unit (42, 20).

2. Device (10) according to claim 1,
**characterized in**
**that** the connecting element (46) is elastic and exerts the restoring force.

3. Device (10) according to one of the preceding claims 1 or 2,
**characterized in**
**that** at least one further deflecting element (60) is arranged and the connecting element (46, 64) is guided around the several deflecting elements (44, 60).

4. Device (10) according to one of the preceding claims,
**characterized in**
**that** a further flexurally flexible and strand-shaped connecting element (46, 64) is guided parallel to the first connecting element (46).

5. Device (10) according to one of the preceding claims,
**characterized in**
**that** the guide unit (42, 20) has a guide rail (42), in which the sliding element (28) is mounted in a longitudinally displaceable manner, in particular via a roller bearing unit (52, 54).

6. Device (10) according to one of the preceding claims,
**characterized in**
**that** the connecting element (46) is fastened at one end to a fixing element (48), which is adjustable for setting a pretension.

7. Device (10) according to one of the preceding claims and according to claim 5,
**characterized in**
**that** the guide unit (42, 20) has a base plate (20), to which the guide rail (42) is fastened, in particular centrally, and which is designed, in particular, as a mounting plate for mounting on a robot arm (2).

8. Device (10) according to one of the preceding claims,
**characterized in**
**that** a guide clamp (30) is immovably fastened to the guide unit (42, 20), through which guide clamp the line is guided in a slidingly displaceable manner in the mounted state.

9. Device (10) according to one of the preceding claims,
**characterized in**
**that** the strand-shaped connecting element (64) is connected to an elastic restoring element (66).

10. Device (10) according to the preceding claim,
**characterized in**
**that** the strand-shaped connecting element (64) is guided around a non-round or eccentrically mounted rotary element (70) and is fastened thereto in such a way that, upon a movement of the connecting element (64), this leads to a rotary movement of the rotary element (70) and, due to its non-round design or eccentric mounting, to a change of a lever arm.

11. Device (10) according to one of the preceding claims,
**characterized in**
**that** the deflecting element (44) is mounted in a hinged manner on the guide unit (42, 20).

12. Device (10) according to one of the preceding claims,
**characterized in**
**that** the restoring mechanism (40) is enclosed in a housing (16), which has a slot-shaped opening (22), which extends in the longitudinal direction (2) and via which a fastening element (14, 24) for fixing the line is connected to the sliding element (28) of the restoring mechanism (40) arranged in the housing (16).

13. Device (10) according to the preceding claim,
**characterized in**
**that** the housing (16) has two opposite slot-shaped openings (22) and the fastening element (14, 24) comprises a bracket (24) with two opposite bracket arms (26), which are respectively connected to the sliding element (28) in the housing (16) via the two openings (22), and / or
**that** the guide unit (42, 20) comprises a base plate (20) to which a guide rail (42) is attached, in which the sliding element (28) is mounted so as to be longitudinally movable, wherein the housing (16) has the base plate (20) as a base, and a housing cover (18), which completely covers the base plate (20) with the restoring mechanism (40) mounted thereon.

14. Device (10) according to one of the preceding two claims,
**characterized in**
**that** the fastening element (14, 24) has a fastening clamp (14) arranged outside the housing (16) for fixing the line.

15. Articulated arm robot (1) with a device according to one of the preceding claims.

## Revendications

1. Dispositif (10) pour le guidage d'au moins une ligne d'un robot à bras articulé, en particulier pour le guidage d'un ensemble de tuyaux (9) d'un robot industriel (1), avec un mécanisme de rappel (40) pour exercer une force de rappel sur la ligne, dans lequel le mécanisme de rappel (40) comprend
- une unité de guidage (42, 20) et un élément coulissant (28), dans lequel l'élément coulissant (28) est relié à un élément de fixation pour fixer la ligne et est maintenu sur l'unité de guidage (42, 20) de manière à pouvoir être déplacé entre une première et une deuxième position,
- une unité de rappel élastique, qui est disposée de manière opérationnelle entre l'unité de guidage (42, 20) et l'élément coulissant (28) afin d'exercer une force de rappel sur l'élément coulissant (28), **caractérisé en ce que**
l'unité de rappel comprend au moins un élément déflecteur (44) et un élément de liaison (46, 64) flexible en flexion en forme de brin, qui est guidé autour de l'élément déflecteur (44) et qui est relié à l'élément coulissant (28) et à l'unité de guidage (42, 20), l'élément de liaison étant généralement fixé par une extrémité à un point de fixation sur l'unité de guidage (42, 20).

2. Dispositif (10) selon la revendication 1,
**caractérisé en ce**
**que** l'élément de liaison (46) est élastique et exerce la force de rappel.

3. Dispositif (10) selon l'une des revendications précédentes 1 ou 2,
**caractérisé en ce**
**qu'**au moins un autre élément déflecteur (60) est disposé et que l'élément de liaison (46, 64) est guidé autour des plusieurs éléments déflecteurs (44, 60).

4. Dispositif (10) selon l'une des revendications précédentes,
**caractérisé en ce**
**qu'**un autre élément de liaison (46, 64) flexible en flexion et en forme de brin est guidé parallèlement au premier élément de liaison (46).

5. Dispositif (10) selon l'une des revendications précédentes,
**caractérisé en ce**
**que** l'unité de guidage (42, 20) comprend un rail de guidage (42), dans lequel l'élément coulissant (28) est monté de manière à pouvoir se déplacer longitudinalement, en particulier par l'intermédiaire d'une unité de roulement à rouleaux (52, 54).

6. Dispositif (10) selon l'une des revendications précédentes,
**caractérisé en ce**
**que** l'élément de liaison (46) est fixé à une extrémité à un élément de fixation (48), qui est ajustable afin de régler une précontrainte.

7. Dispositif (10) selon l'une des revendications précédentes et selon la revendication 5,
**caractérisé en ce**
**que** l'unité de guidage (42, 20) comprend une plaque de base (20), sur laquelle le rail de guidage (42) est fixé, en particulier de manière centrale, et qui est conçue, en particulier, comme plaque de montage pour le montage sur un bras de robot (2).

8. Dispositif (10) selon l'une des revendications précédentes,
**caractérisé en ce**
**qu'**un collier de guidage (30) est fixé à l'unité de guidage (42, 20) de manière stationnaire, par lequel la ligne est guidée de manière coulissante à l'état monté.

9. Dispositif (10) selon l'une des revendications précédentes,
**caractérisé en ce**
**que** l'élément de liaison en forme de brin (64) est relié à un élément de rappel élastique (66).

10. Dispositif (10) selon la revendication précédente,
**caractérisé en ce**
**que** l'élément de liaison en forme de brin (64) est guidé autour d'un élément rotatif (70) non circulaire ou monté de manière excentrique et est fixé à celui-ci de telle sorte que, lors du mouvement de l'élément de liaison (64), cela entraîne un mouvement de rotation de l'élément rotatif (70) et, en raison de sa forme non circulaire ou de son montage excentrique, une modification d'un bras de levier.

11. Dispositif (10) selon l'une des revendications précédentes,
**caractérisé en ce**
**que** l'élément déflecteur (44) est monté de manière articulée sur l'unité de guidage (42, 20).

12. Dispositif (10) selon l'une des revendications précédentes,
**caractérisé en ce**
**que** le mécanisme de rappel (40) est enfermé dans un boîtier (16), qui comprend une ouverture (22) en forme de fente s'étendant dans la direction longitudinale (2), par laquelle un élément de fixation (14, 24) pour la fixation de la ligne est relié à l'élément coulissant (28) du mécanisme de rappel (40) disposé dans le boîtier (16).

13. Dispositif (10) selon la revendication précédente,
**caractérisé en ce**
**que** le boîtier (16) comprend deux ouvertures opposées en forme de fente (22) et l'élément de fixation (14, 24) comporte un support (24) avec deux bras de support (26) opposés, qui sont respectivement reliés à l'élément coulissant (28) dans le boîtier (16) via les deux ouvertures (22), et / ou
**que** l'unité de guidage (42, 20) comportant une plaque de base (20) sur laquelle est fixé un rail de guidage (42) dans lequel l'élément coulissant (28) est monté de manière à pouvoir coulisser longitudinalement, le boîtier (16) comprend la plaque de base (20) comme base et un couvercle de boîtier (18) recouvrant complètement la plaque de base avec le mécanisme de rappel (40) monté sur celle-ci.

14. Dispositif (10) selon l'une des deux revendications précédentes,
**caractérisé en ce**
**que** l'élément de fixation (14, 24) comprend un collier de fixation (14) disposé à l'extérieur du boîtier (16) pour fixer la ligne.

15. Robot à bras articulé (1) avec un dispositif selon l'une des revendications précédentes.
